(19) Europäisches Patentamt / European Patent Office / Office européen des brevets

(11) **EP 4 687 217 A1**

## (12) EUROPEAN PATENT APPLICATION

(43) Date of publication:
**04.02.2026 Bulletin 2026/06**

(21) Application number: **25187162.0**

(22) Date of filing: **03.07.2025**

(51) International Patent Classification (IPC):
**H01Q 1/32** $^{(2006.01)}$        **G01S 13/931** $^{(2020.01)}$
**H01Q 21/08** $^{(2006.01)}$        **H01Q 21/20** $^{(2006.01)}$

(52) Cooperative Patent Classification (CPC):
**H01Q 1/3283; G01S 13/931; H01Q 21/08;**
**H01Q 21/20;** G01S 2013/93274

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **30.07.2024 TW 113128338**

(71) Applicant: **Arcadyan Technology Corporation
Hsinchu City 30071 (TW)**

(72) Inventors:
• **CHENG, Shih-Jieh
  300 Hsinchu City (TW)**
• **KUO, Shin-Lung
  300 Hsinchu City (TW)**

(74) Representative: **Krauns, Christian
  Wallinger Ricker Schlotter Tostmann
  Patent- und Rechtsanwälte Partnerschaft mbB
  Zweibrückenstraße 5-7
  80331 München (DE)**

## (54) RADAR ANTENNA DEVICE AND RADAR SYSTEM

(57) The invention discloses radar antenna device and radar system, which the radar antenna device is for installing on side surfaces of vehicle. The radar antenna device comprises two antenna circuit boards, and each antenna circuit board comprises a first surface including a signal transmitting unit and a signal receiving unit. The signal transmitting unit includes a first signal zone, and the first signal zone is located within range of angles between 0 degree and 50 degrees from normal line of center of the first surface. The radar antenna device also comprises a base for installing two antenna circuit boards. One end of each antenna circuit board is coupled to one end of the base, forming an angle of 52.5 degrees to 65 degrees, such that a first direction, parallel to the base, extending from center of the first surface is located in the first signal zone.

FIG. 3

**Description**

BACKGROUND OF THE INVENTION

Field of the Invention

The present disclosure is directed to a radar antenna device, and particularly, to a radar system.

Description of the Related Art

Currently, automotive radars implements antenna circuit boards for receiving and transmitting signals, and the signal radiation field patterns of antenna circuit boards are directional, which signal radiation intensity of antenna circuit boards is relatively stronger and with longer detection range, whiting the range between -50 degrees and 50 degrees with normal line of antenna circuit board. Generally, vehicle radar device has two antenna circuit boards disposed on a base, and the two antenna circuit boards are arranged approximately in a triangle with the base, which is attached to side surface of the vehicle through the base, so that vehicle radar device is fixed to the side surface of the vehicle. When moving direction of the vehicle is not within the stronger signal radiation intensity range of the antenna circuit board, the radar detection distance is shortened.

SUMMARY OF THE INVENTION

The present disclosure discloses techniques of installation of radar antenna device with signal transmitting unit, which enables the strongest signal zone of radar antenna device installed on side surface of a vehicle to be substantially parallel to moving direction of the vehicle, to enhance the detection distance along the moving direction of the vehicle.

According to a first aspect of the present disclosure, a radar antenna device for installing on a side surface of a vehicle, comprises a first antenna circuit board and a second antenna circuit board. Each of the first antenna circuit board and the second antenna circuit board comprises a first surface. The first surface of each of the first antenna circuit board and the second antenna circuit board includes a signal transmitting unit and a signal receiving unit. The signal transmitting unit includes a first signal zone, and the first signal zone is located within a range of angles between 0 degree and 50 degrees relative to a normal line of a center of the first surface. T radar antenna device also comprises a base configured for installing the first antenna circuit board and the second antenna circuit board, such that the first surface of each of the first antenna circuit board and the second antenna circuit board towards away from the base. The first antenna circuit board and the second antenna circuit board are respectively coupled to two ends of the base, which the first antenna circuit board and the base form a first angle, and the second antenna circuit board and the base form a second angle. The first angle is between 52.5 degrees and 65 degrees, and the second angel is between 52.5 degrees and 65 degrees, such that a first direction, which is parallel to the base and extends from the center of the first surface is located in the first signal zone.

According to a second aspect of the present disclosure, a radar system for installing on a side surface of a vehicle, comprises a control unit and multiple radar antenna devices electrically coupled to the control unit and installed on two side surfaces, front surface or the rear surface of the vehicle for transmitting and receiving radar signals and feeding the received radar signals to the control unit. Each radar antenna device comprises a first antenna circuit board and a second antenna circuit board. Each of the first antenna circuit board and the second antenna circuit board comprises a first surface, the first surface of each of the first antenna circuit board and the second antenna circuit board including a signal transmitting unit and a signal receiving unit. The signal transmitting unit includes a first signal zone, and the first signal zone is located within a range of angles between 0 degree and 50 degrees related to a normal line of a center of the first surface. Each radar antenna device also comprises a base configured for installing the first antenna circuit board and the second antenna circuit board, such that the first surface of each of the first antenna circuit board and the second antenna circuit board towards away from the base. The first antenna circuit board and the second antenna circuit board are respectively coupled to two ends of the base, which the first antenna circuit board and the base form a first angle, and the second antenna circuit board and the base form a second angle. The first angle is between 52.5 degrees and 65 degrees, and the second angel is between 52.5 degrees and 65 degrees, such that a first direction, parallel to the base, extending from the center of the first surface is located in the first signal zone.

The above and other aspects of the invention will become better understood with regard to the following detailed description of the preferred but non-limiting embodiment(s). The following description is made with reference to the accompanying drawings.

BRIEF DESCRIPTION OF THE DRAWINGS

FIG. 1 is a diagram illustrating an example antenna circuit board including the signal transmitting unit and the signal receiving unit, according to one or more embodiments of the present disclosure.

FIGs. 2A and 2B are diagrams respectively illustrating signal zones and radar antenna radiation field pattern, of antenna circuit board including the signal transmitting unit, according to one or more embodiments of the present disclosure.

FIG. 3 is a diagram illustrating an example radar antenna device, according to one or more embodiments of the present disclosure.

FIG. 4 is a diagram illustrating an example radar system installed on multiple surfaces of the vehicle, according to one or more embodiments of the present disclosure.

Like reference numbers and designations in the various drawings indicate like elements. It is also to be understood that the various exemplary implementations shown in the figures are merely illustrative representations and are not necessarily drawn to scale.

DETAILED DESCRIPTION OF THE INVENTION

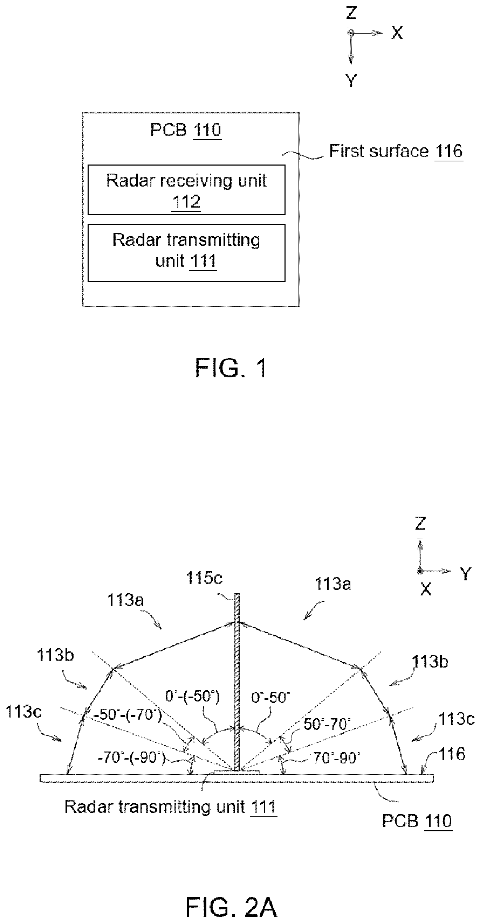

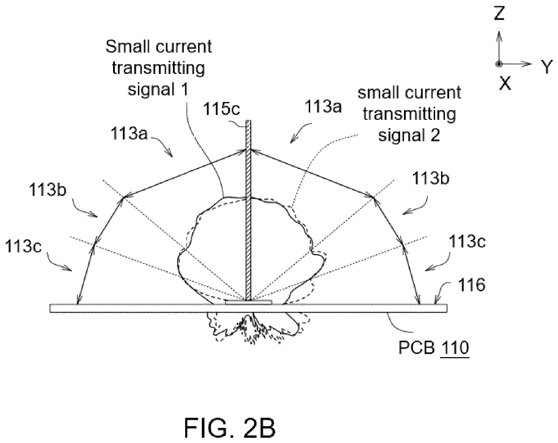

FIG. 1 is a diagram illustrating the antenna circuit board 110 according to one or more embodiments of the present disclosure. The antenna circuit board 110 comprises the signal transmitting unit 111 and the signal receiving unit 112, which the signal transmitting unit 111 and the signal receiving unit 112 are disposed on the first surface 116 of the antenna circuit board 110. The signal transmitting unit 111 is configured to transmit a signal, and the signal receiving unit 112 receives the signal reflected by the object to detect the object. In the example of FIG. 1, the number of the signal transmitting unit 111 and the number of the signal receiving unit 112, disposed the antenna circuit board 110, are one, but is not limited to the present disclosure. In some implementations, multiple signal transmitting units and multiple signal receiving units can be disposed on the antenna circuit board. For example, four signal transmitting units and four signal receiving units can be disposed on the antenna circuit board, or which can be designed according to other requirements. Both of the signal transmitting unit 111 and the signal receiving unit 112 disposed on the antenna circuit board 110, include radar antenna for transmitting and receiving signals, according to radar antenna radiation field pattern of the signal transmitting unit 111 (as shown by FIG. 2B), which different signal transmitting strengths vary among different directions of the first surface 116 of the antenna circuit board 11, and it will be detailed described referring FIGs. 2A and 2B as follows.

FIGs. 2A and 2B are diagrams respectively illustrating signal zones and radar antenna radiation field pattern (based on small current transmitting signal 1 or small current transmitting signal 2), of antenna circuit board 110 including the signal transmitting unit 111, according to one or more embodiments of the present disclosure. In this embodiment, the radar antenna radiation field pattern of the signal transmitting unit 111 is designed with directional, which means the signal transmitting strength (gain) is stronger in certain angles. In this case, the transmitting signal radiates approximately from the center of the signal transmitting unit 111 toward to the normal line 115c perpendicular to the first surface 116 of the antenna circuit board 110, which is related to the radar antenna radiation field pattern on the first surface 116 of the antenna circuit board 110 referring to example radar antenna radiation field pattern of FIG. 2B (based on small current transmitting signal 1 or small current transmitting signal 2).

It can be understood from the example radar antenna radiation field pattern of FIG. 2B and the following Table I, the radiation field pattern of the signal transmitting unit 111 shown by FIG. 2A, includes the first signal zone 113a, the second signal zone 113b and the third signal zone 113c. Wherein, the first signal zone 113a is adjacent to two sides of the normal line 115c, and the angle thereof with the normal line 115c is within angle ranges of between -50 degrees and 0 degrees and between 0 degrees and 50 degrees, which is the zone with the strongest signal transmitting strength (average gain is 10.22 to 10.79dB). The second signal zone 113b is located at area within the angle range with the normal line 115c between -70 degrees to -50 degrees and between 50 degrees to 70 degrees, which is the zone with the midst signal transmitting strength (average gain is 4.62 to 5.33dB). The third signal zone 113c is located at area within the angle range with the normal line 115c between -90 degrees and -70 degrees and between 70 degrees and 90 degrees, which is the zone with the weakest signal transmitting strength (average gain is -4.75 to -6.31dB).

Table I: relations between antenna transmitting intensity and angle

| Angle range with the normal line 115c | -70° to (-90°) | -50° to (-70°) | 0° to (-50°) | 0° to 50° | 50° to 70° | 70° to 90° |
|---|---|---|---|---|---|---|
| Average gain (dB) | -6.31 | 5.33 | 10.79 | 10.22 | 4.62 | -4.75 |

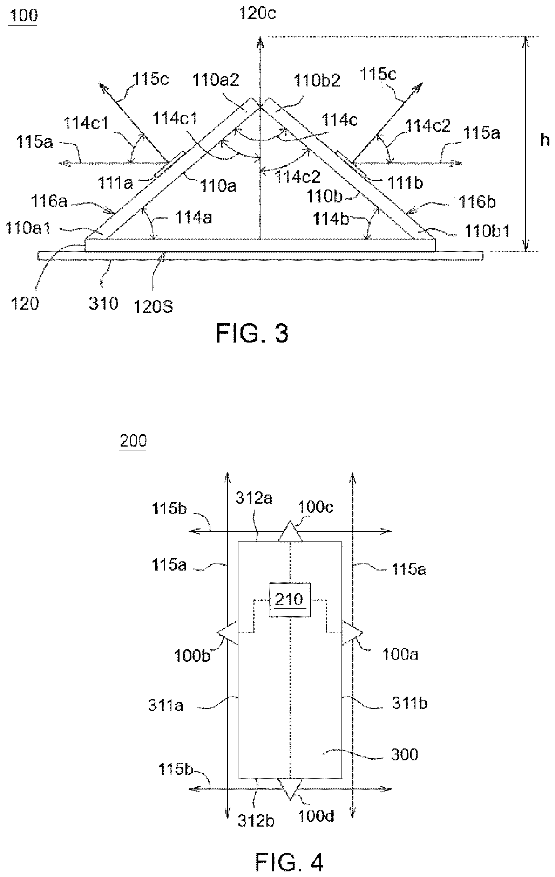

FIG. 3 is a diagram illustrating an example radar antenna device 100 disposed on the side surface 310 of the vehicle, according to one or more embodiments of the present disclosure. The radar antenna device 100 comprises the antenna circuit board 110a and the antenna circuit board 110b. The antenna circuit board 110a and the antenna circuit board 110b are identical with the antenna circuit board 110 of FIGs. 2A and 2B. The first surface 116a of the antenna circuit board 110a disposes with the signal transmitting unit 111a, and the first surface 116b of the antenna circuit board 110b disposes with the signal transmitting unit 111b.Tthe radar antenna device 100 also comprises the base 120 for installing with or fixing the antenna circuit board 110a and the antenna circuit board 110b. The first surface 116a of the antenna circuit board 110a and the first surface 116b of the antenna circuit board 110b are toward away from the base 120, which means the signal transmitting unit 111a and the signal transmitting unit 111b are not facing the base 120 and the side surface 310 of the vehicle. The first end 110a1 of the antenna circuit board 110a, and the first end 110b1 of the antenna circuit board 110b are respectively coupled to two ends of the base 120, and respectively forms the first angle 114a and the second angle 114b with the base 120. In another embodiment, the antenna circuit board 110a and the antenna circuit board 110b indirectly fixed on the base 120 by on a bracket (not shown). The radar antenna device 100 can be installed, by the base 120, on the side surface 310 of the vehicle, or other plain surfaces of the vehicle or plain surfaces of mounting objects (such as brackets). It can be understood that the side surface 310 or other plain surface, of the vehicle, or plain surface of mounting object installing the base 120, is substantially parallel to the base 120. As discussed above, the strongest signal transmitting zones of the signal transmitting unit 111a and the signal transmitting unit 111b are respectively located in angel ranges with the normal line 115c between -50 degrees to 0 degrees and 0 degree to 50 degrees, which is the foresaid first signal zone (such as the first signal zone 113a of FIGs. 2A and 2B). The normal lines 115c are respectively located at the center of the signal transmitting unit 111a and the signal transmitting unit 111, and perpendicular to the first surface 116a and the first surface 116b. To enable the first direction 115a, parallel to the base 120, extending from the center of the first surface 116a and the first surface 116b, to be located in the first signal zone with the strongest transmitting signal, the first angle 114a and the second angle 114b respectively forming between the antenna circuit board 110a and the antenna circuit board 110b, and the base 120, are between 52.5 degrees to 65 degrees. Therefore, the angle between the first direction 115a, parallel to the base 120, extending from the center of the first surface 116a and the first surface 116b, and the normal line 115c is between 25 degrees to 37.5 degrees, which is located in the foresaid first signal zone. When the base 120 is installed on the side surface 310 of the vehicle, the first direction 115a is approximately parallel to the side surface 310 of the vehicle, which means that when the first direction 115a is located in the first signal zone with the strongest transmitting signal, the radar detection distance along the moving direction backward or forward of the vehicle is increased.

Specifically, for example, when the antenna circuit board 110 and the side surface of the vehicle which installs (maybe by one end of the antenna circuit board 110 disposing on the base parallel to and fixed on the side surface of the vehicle) enable the angle between the antenna circuit board 110 and the side surface of the vehicle is between 25 degrees to 50 degrees, the angle between forward or backward direction of the vehicle and the normal direction of the first surface of the antenna circuit board is in the range from 40 degrees to 65 degrees, which is located in the second signal zone, not the first signal zone with the strongest transmitting signal. Equation (1) used for calculating the radar maximum signal (detection) distance is as follows:

$$d_{\max} = \left( \frac{\sigma P_t G_{TX} G_{RX} \lambda^2 T_{meas}}{(4\pi)^3 SNR_{min} kTF} \right)^{\frac{1}{4}}$$

Equation (1)

Wherein, $d_{max}$ represents radar maximum signal (detection), distance, $\sigma$ represents radar cross section, $G_{TX}$ represents signal transmitting gain, $G_{RX}$ represents signal receiving gain, $\lambda$ represents signal wavelength, $T_{meas}$ represents number of chirps multiplied by chip duration, $SNR_{min}$ represents minimum detectable signal, $k$ is constant ($1.38 \times 10^{-23}$), $T$ represents temperature, and $F$ represents frequency. According to the equation (1) above, it can be understood that the increasing of the signal transmitting gain $G_{TX}$ is proportional to the radar maximum signal (detection), distance $d_{max}$, which means that if moving certain direction, such as moving direction forward or backward of the vehicle, of the signal transmitting gain G_TX from the midst signal zone with 4.62 dB average gain (such as the second signal zone 113b) to the storing signal zone with 10.22 dB average gain (such as the first signal zone 113a), can also increase the radar maximum signal (detection), distance $d_{max}$. In other words, as discussed in examples above, when the first direction 115a (parallel to the moving direction of the vehicle), parallel to the base 120, extending from the center of the first surface 116a and the first surface 116b has an angle between 25 degrees and 37.5 degrees with the normal line 115c, which is within the first signal zone with the strongest transmitting signal, the radar detection distance of moving direction forward or backward of the vehicle can be increased.

In some implementations, the second end 110a2 of the antenna circuit board 110a couple to the second end 110b2 of the antenna circuit board 110b. In one embodiment, the normal line 120C is perpendicular to the base 120 and passes through the second end 110a2 of the antenna circuit board 110a and the second end 110b2 of the antenna circuit board 110b. The angle 114c1 is between the normal line 120 and the antenna circuit board 110a, the angle 114c2 is between the normal line 120 and the antenna circuit board 110b, and the angle 114c3 is between the antenna circuit board 110a and the antenna circuit board 110b, which the third angle 114c is sum of the angle 114c1 and the angle 114c2, and can be 50 degrees to 75 degrees. In one embodiment, when the sizes of the antenna circuit board 110a and the antenna circuit board 110b are identical, the angle 114c1 is identical to the angle 114c2. In another embodiment, when the sizes of the antenna circuit board 110a and the antenna circuit board 110b are different, the angle 114c1i is different to the angle 114c2. In one embodiment, the angle 114c1 is between the first direction 115a and the normal line 115c of the antenna circuit board 110a, and the angle 114c2 is between the first direction 115a and the normal line 115c of the antenna circuit board 110b.

As shown by FIG. 3, the radar antenna device 100 includes the height h, which the height h is the minimum distance between the coupling part of the second end 110a2 of the antenna circuit board 110a and the second end 110b2 of the antenna circuit board 110b, and the surface 120S of the base 120, wherein the base 120S is the attaching surface of the base 120 and the side surface 310 of the vehicle.

FIG. 4 is a diagram illustrating the radar system 200 installed on side surface 311a, side surface 311b, front surface 312a and rear surface 312b, of the vehicle 300, according to one or more embodiments of the present disclosure. The radar system 200 comprises the radar antenna device 100a, the radar antenna device 100b, the radar antenna device 100c and the radar antenna device 100d, which are respectively installed on the side surface 311a, the side surface 311b, the front surface 312a and the rear surface 312b, of the vehicle 300. The radar antenna device 100a, the radar antenna device 100b, the radar antenna device 100c and the radar antenna device 100d are similar to the radar antenna device 100 of FIG. 3, the details of which are omitted here. The radar system 200 also comprises the control unit 210 electrically coupled to the radar antenna device 100a, the radar antenna device 100b, the radar antenna device 100c and the radar antenna device 100d. The radar antenna device 100a, the radar antenna device 100b, the radar antenna device 100c and the radar antenna device 100d can transmit and receive radar signals (such as by the signal transmitting unit 111 and the signal receiving unit 112, of FIG. 1), and feed the received radar signals to the control unit 210. As described above, the angel between antenna circuit board of each of the radar antenna device 100a, the radar antenna device 100b, the radar antenna device 100c and the radar antenna device 100d, and the base (such as the first angle 116a and the second angle 116b respectively between the antenna circuit board 110a and the antenna circuit board 110b, and the base 120, of FIG. 3) is 52.5 degrees to 65 degrees, such that, the first direction 115a and the second direction 115b are located in the strongest signal zones (such as the first signal zone 113a of FIGs. 2A and 2B) of the radar antenna device 100a, the radar antenna device 100b, the radar antenna device 100c and the radar antenna device 100d respectively installed on the side surface 311a, the side surface 311b, the front surface 312a and the rear surface 312b, of the vehicle 300. For example, the second direction 115b can be located in the strongest signal zones of the radar antenna device 100c and the radar antenna device 100d installed on the front surface 312a and the rear surface 312b, to increase the radar detection distance of two sides of the vehicle, and also for example, the first direction 115a can be located in the strongest signal zones of the radar antenna device 100a and the radar antenna device 100b installed on the side surface 311a and the side surface 311b, to increase the radar detection distance of front or rear of the vehicle, as shown by FIG. 4.

According to embodiments and examples above, it can be understood that the techniques provided by the present disclosure, enables the angle between the antenna circuit board and the entire surface fixing radar (by the base) to be 52.5 degrees to 65 degrees, which facilitates the direction parallel to the surface (or base) fixing the radar to be located in the strong signal zone with the strongest transmitting strength of the radar antenna. Therefore, when the radar antenna device is installed on the side surface of the vehicle, the detection distance of the vehicle forward or backward can be increased by 10% to 40% (based on the calculation of equation (1)). Moreover, the radar system composed of the radar antenna devices provided by the present disclosure can be applied for installing around the vehicle, which increase the detection distance of the vehicle's front, rear, left and right sides by 10% to 40%.

While this document may describe many specifics, these should not be construed as limitations on the scope of an invention that is claimed or of what may be claimed, but rather as descriptions of features specific to particular embodiments. Certain features that are described in this document in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination in some cases can be excised from the combination, and the claimed combination may be directed to a sub-combination or a variation of a sub-combination. Similarly, while operations are depicted in the drawings in a particular order, this should not be understood as requiring that such operations be performed in the particular order shown or in sequential order, or that all illustrated operations be performed, to achieve desirable results.

Only a few examples and implementations are disclosed. Variations, modifications, and enhancements to the described examples and implementations and other implementations can be made based on what is disclosed.

**Claims**

1. A radar antenna device for installing on a side surface of a vehicle, comprising:

   a first antenna circuit board and a second antenna circuit board, each of the first antenna circuit board and the second antenna circuit board comprising a first surface, the first surface of each of the first antenna circuit board and the second antenna circuit board including a signal transmitting unit and a signal receiving unit, wherein the signal transmitting unit includes a first signal zone, and the first signal zone is located within a range of angles between 0 degree and 50 degrees relative to a normal line of a center of the first surface; and
   a base, configured for installing the first antenna circuit board and the second antenna circuit board, such that the first surface of each of the first antenna circuit board and the second antenna circuit board towards away from the base,
   wherein the first antenna circuit board and the second antenna circuit board are respectively coupled to two ends of the base, which the first antenna circuit board and the base form a first angle, and the second antenna circuit board and the base form a second angle,
   wherein the first angle is between 52.5 degrees and 65 degrees, and the second angel is between 52.5 degrees and 65 degrees, such that a first direction, which is parallel to the base and extends from the center of the first surface, is located in the first signal zone,
   wherein the signal transmitting unit on the first surface of each of the first antenna circuit board and the second antenna circuit board includes a second signal zone and a third signal zone, wherein the second signal zone is located within a range of angles between 50 degrees and 70 degrees relative to the normal line of the center of the first surface, and the third signal zone is located within a range of angles between 70 degrees and 90 degrees relative to the normal line of the center of the first surface,
   wherein a signal transmitting strength of the first signal zone is greater than that of the second signal zone, and the signal transmitting strength of the second signal zone is greater than that of the third signal zone.

2. The radar antenna device of claim 1, wherein the first antenna circuit board is coupled to the second antenna circuit board to form a third angle, and the third angle is between 50 degrees and 75 degrees.

3. The radar antenna device of claim 1 or 2, wherein a second direction, which is perpendicular to the base and extends from the center of the first surface, is located in the third signal zone.

4. The radar antenna device of anyone of the claims 1 to 3, wherein the first direction is parallel to the moving direction of the vehicle.

5. A radar system for installing on a side surface of a vehicle, comprising:

   a control unit; and
   a plurality of radar antenna devices, electrically coupled to the control unit and installed on two side surfaces, front surface or the rear surface of the vehicle for transmitting and receiving radar signals and feeding the received radar signals to the control unit,
   wherein each of the plurality of radar antenna devices comprises:

      a first antenna circuit board and a second antenna circuit board, each of the first antenna circuit board and the second antenna circuit board comprising a first surface, the first surface of each of the first antenna circuit board and the second antenna circuit board including a signal transmitting unit and a signal receiving unit, wherein the signal transmitting unit includes a first signal zone, and the first signal zone is located within a range of angles between 0 degree and 50 degrees relative to a normal line of a center of the first surface; and
      a base, configured for installing the first antenna circuit board and the second antenna circuit board, such that the first surface of each of the first antenna circuit board and the second antenna circuit board towards away from the base,
      wherein the first antenna circuit board and the second antenna circuit board are respectively coupled to two ends of the base, which the first antenna circuit board and the base form a first angle, and the second antenna circuit board and the base form a second angle,
      wherein the first angle is between 52.5 degrees and 65 degrees, and the second angel is between 52.5 degrees and 65 degrees, such that a first direction, which is parallel to the base and extends from the center of the first surface, is located in the first signal zone,

wherein the signal transmitting unit on the first surface of each of the first antenna circuit board and the second antenna circuit board includes a second signal zone and a third signal zone, wherein the second signal zone is located within a range of angles between 50 degrees and 70 degrees relative to the normal line of the center of the first surface, and the third signal zone is located within a range of angles between 70 degrees and 90 degrees relative to the normal line of the center of the first surface,

wherein a signal transmitting strength of the first signal zone is greater than that of the second signal zone, and the signal transmitting strength of the second signal zone is greater than that of the third signal zone.

6.  The radar system of claim 5, wherein the first antenna circuit board is coupled to the second antenna circuit board to form a third angle, which the third angle is between 50 degrees and 75 degrees.

7.  The radar system of claim 5 or 6, wherein a second direction, which is perpendicular to the base and extends from the center of the first surface, is located in the third signal zone.

8.  The radar system of anyone of the claims 5 to 7, wherein the plurality of radar antenna devices comprises a first radar antenna device and a second radar antenna device respectively installed on the two side surfaces of the vehicle, and the first direction of each of the first and the second radar antenna devices is parallel to the moving direction of the vehicle,

wherein the plurality of radar antenna devices comprises a third radar antenna device and a fourth radar antenna respectively installed on the front surface and the rear surface of the vehicle, and the first direction of each of the third and the fourth radar antenna devices is perpendicular to the moving direction of the vehicle.

Z
⊙ → X
↓
Y

PCB 110

First surface 116

Radar receiving unit
112

Radar transmitting
unit 111

FIG. 1

Z
↑
⊙ → Y
X

115c        113a

113a

113b                                                    113b

113c                                                            113c

0°-(-50°)   0°-50°

-50°-(-70°)              50°-70°

-70°-(-90°)              70°-90°

116

Radar transmitting unit 111

PCB 110

FIG. 2A

FIG. 2B

FIG. 3

FIG. 4

| | Europäisches Patentamt European Patent Office Office européen des brevets | **EUROPEAN SEARCH REPORT** | **Application Number** EP 25 18 7162 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/123454 A1 (TSAI MING-HUNG [TW]) 21 April 2022 (2022-04-21) * figures 3, 4 * * paragraphs [0002], [0025], [0029] * ----- | 1-8 | INV. H01Q1/32 G01S13/931 H01Q21/08 H01Q21/20 |
| X | EP 4 163 665 A1 (GM CRUISE HOLDINGS LLC [US]) 12 April 2023 (2023-04-12) * figure 4 * * paragraphs [0004], [0026] * ----- | 1-8 | |

| | | | TECHNICAL FIELDS SEARCHED (IPC) |
|---|---|---|---|
| | | | H01Q G01S |

The present search report has been drawn up for all claims

| Place of search | Date of completion of the search | Examiner |
|---|---|---|
| The Hague | 9 December 2025 | Taddei, Ruggero |

EPO FORM 1503 03.82 (P04C01)

## ANNEX TO THE EUROPEAN SEARCH REPORT
## ON EUROPEAN PATENT APPLICATION NO.

EP 25 18 7162

This annex lists the patent family members relating to the patent documents cited in  the above-mentioned European search report.
The members are as contained in the European Patent Office EDP file on
The European Patent Office is in no way liable for these particulars which are merely given for the purpose of information.

09-12-2025

| Patent document cited in search report | | Publication date | Patent family member(s) | | Publication date |
|---|---|---|---|---|---|
| US 2022123454 | A1 | 21-04-2022 | CN | 114384521 A | 22-04-2022 |
| | | | DE | 102020130893 A1 | 21-04-2022 |
| | | | JP | 7118515 B2 | 16-08-2022 |
| | | | JP | 2022067597 A | 06-05-2022 |
| | | | TW | 202218235 A | 01-05-2022 |
| | | | US | 2022123454 A1 | 21-04-2022 |
| EP 4163665 | A1 | 12-04-2023 | EP | 4163665 A1 | 12-04-2023 |
| | | | US | 2023114899 A1 | 13-04-2023 |

For more details about this annex : see Official Journal of the European Patent Office, No. 12/82